# EUROPEAN PATENT SPECIFICATION

(11) **EP 0 653 240 B1**
(45) Date of publication and mention of the grant of the patent: **03.09.2003**
(21) Application number: 93910353.7
(22) Date of filing: 17.05.1993
(51) Int. Cl.: B01D 63/08

(54) **METHOD OF MANUFACTURING A FILTRATION FILM ELEMENT**
METHODE ZUR HERSTELLUNG EINES FILTRATIONSFILMELEMENTS
PROCEDE DE FABRICATION D'UN ELEMENT A MEMBRANE DE FILTRATION

(43) Date of publication of application: 17.05.1995
(73) Proprietor: Kubota Corporation, Osaka-shi, Osaka 556 (JP)
(72) Inventor: MORO, Masashi, Kubota Corporation, Osaka-shi, Osaka 556 (JP); IZUMI, Kiyoshi, Kubota Corporation, Osaka-shi, Osaka 556 (JP)
(74) Representative: Vonnemann, Gerhard, Dr.-Ing.
(86) International application number: JP9300651
(87) International publication number: WO94026398

(56) References cited:
- EP-A- 0 602 560
- DE-A- 3 726 865
- FR-A- 2 462 925
- FR-A- 2 478 483
- GB-A- 2 092 914
- GB-A- 2 094 655
- JP-A- 1 094 903
- JP-A- 53 125 275
- JP-A- 63 072 305
- JP-A- 63 126 512
- US-A- 4 302 270
- US-A- 4 804 451
- PATENT ABSTRACTS OF JAPAN vol. 11 no. 214 (C-434) ,10 July 1987 & JP-A-62 033523 (TEIJIN LTD) 13 February 1987, & DATABASE WPI Section Ch, Week 8712 Derwent Publications Ltd., London, GB; Class J01, AN 87-082963

## Description

This invention relates to a method of manufacturing a filter membrane element for a membrane separation unit for use in a water treatment apparatus or the like.

From Document JP-A-63 0 72305 a bonding method for filter membranes of a filter cartridge without excessive dissolution of the filter membrane is known. The filter membranes consist of a film coating which is held by a mesh material being bonded by using adhesive. which comprises a solvent common to a base material and the filter membranes, at inner and outer peripheral edges to inner and outer peripheral rims of the base material. The film coating is only positioned on the outer side of the mesh material and does not come into contact with the rims. A fluid passage way is defined by two adjacent filter membranes fixed adjacently on both sides of the rims.

In document US-A-4 804 451 a depletion compartment for a deionization apparatus having an ion exchange membrane is disclosed. The known ion exchange membrane is an ion permeable resin which can be passed only by ions. The resin of the permeable membrane is supported on a substrate. Before bonding the membrane to adjacent spacers of the depletion compartments of the deionization apparatus a portion of the ion exchange resin is removed from one side of the substrate by skiving. The exposed substrate is then adhesively bonded to the spacers of the depletion compartments. For joining the membrane to the adjacent spacers the use of various adhesives, hot-melt adhesives, direct heat weld, thermoplastic interlays, contact adhesives and pressure sensitive hot melt adhesives, is disclosed. The known method for joining the membrane to the spacers requires a first step to remove the ion exchange resin and a second step to apply the adhesive to the exposed support and to join the membrane to the spacers.

Document JP-A-62 033523 discloses that a permeable membrane for selectively passing through it a specific composition of a fluid mixture can be bonded by adhesive to a support plate at an peripheral adhesive portion thereof and a spacer can be disposed at an inner side of the adhesive portion.

Document US 4 302 270 A discloses a method for making an ultrafiltration membrane assembly comprising an ultrafiltration membrane element including a thin membrane having a high polymer melt temperature mechanically joined to a porous support sheet, a coarse fabric drainage mat and an imprevious backing plate, by heat sealing the edges of the assembly. A fused bond is provided between the porous support sheet and the backing plate without fusing the membrane.

Document GB 2 092 914 A discloses a method for sealing a porous carrier to a membrane structure including a membrane and a porous mat backing. The porous carrier and the porous mat backing are impregnated with a polymer, e.g. a neoprene adhesive, leaving a layer of the polymer on the surface of the carrier and on the backing surface. The neoprene based polymer does not stick well to the membrane unless additional solvent it utilized, which is undesirable because the solvent can damage the membrane. The polymer layers on said backing and on said carrier are then heat welded.

It is the object of the present invention to provide a method for manufacturing a filter membrane element with high bond strength between an organic filter membrane having a film coating on both sides of a support member and a filter plate.

In order to accomplish this objective, the invention presents a method of manufacturing a filter membrane element according to the features of claim 1. By this method the non-wooven fabric-made support member can be directly joined with the filter plate, it being thus possible to obtain a bond having sufficient bond strength.

### BRIEF DESCRIPTION OF THE DRAWINGS

Fig. 1 is a perspective view showing the procedure of filter membrane bonding; and
Fig. 2 is a perspective view of an membrane element representing an embodiment which is not according to the invention.

### DESCRIPTION OF A PREFERRED EMBODIMENT OF THE INVENTION

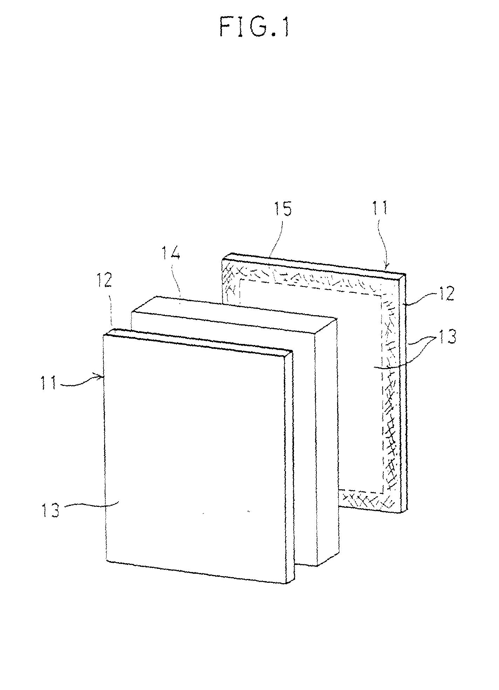

In Fig. 1, an organic filter membrane 11, comprised of an ultrafiltration film or precision filtration film, includes a rectangular plate-like support member 12 made of nonwoven fabric and a film coating 13 formed on the front and rear surfaces of the support member 12. At opposite sides of a rectangular filter plate 14 constructed of ABS resin or the like are positioned organic filter membranes 11 which are adhesively attached to the filter plate 14.

For adhesive attachment of organic filter membranes 11 to the filter plate 14, a solvent 15 is applied in a sufficent amount on a portion of the film coating 13 which corresponds to a peripheral edge portion of each organic filter membrane which is selected as a joint site. Thereupon, that portion of the film coating 13 is dissolved by the solvent applied so that the support member 12 is exposed at that portion. The support member 12 and the filter plate 14 are then fixedly joined by means of fusion bonding with each other.

In this way, the film coating 13 of each organic filter membrane 12 is dissolved at the joint site to expose the support member 12 at that site so that the constituent nonwoven fabric of the support member 12 comes into direct bond with the filter plate 14. This provides improved bond, which ensures sufficient bond strength.

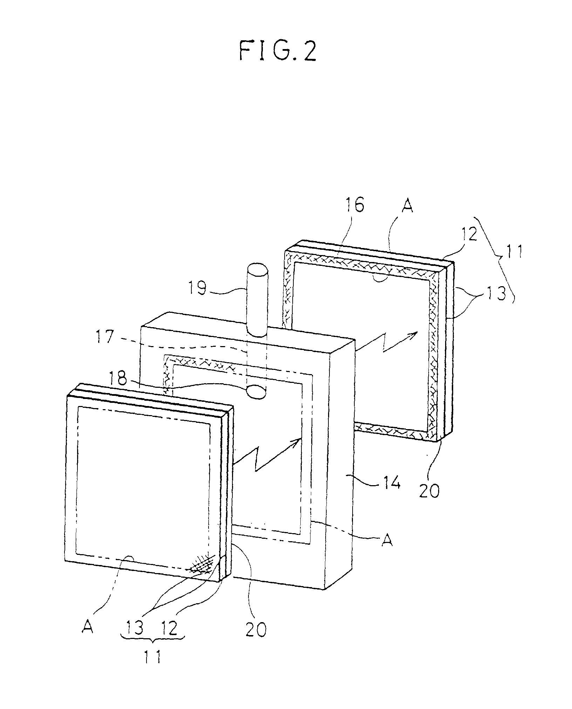

Fig. 2 shows an embodiment which is not according to the invention. In this Fig. 2 embodiment an organic filter membrane 11, such as an ultrafiltration or precision filtration membrane, comprises a support member 12 made of nonwoven fabric, and a film coating 13 formed on both surfaces of the support member 12. A pair of organic filter membranes 11 are positioned at opposite sides of a filter plate 14 in such a way as to enclose the filter plate 14 between them.

Between each organic filter membrane 11 and the filter plate 14 is interposed a rectangular felt-like spacer 20 of same size as the organic filter membrane 11. It is noted that an organic filter membrane 11 may be provided only on one side of the filter plate 14.

Each organic filter plate 14 and the spacer 20 are joined with each other by an adhesive 16 at respective glued portions A formed along their peripheral edges, and similary the filter membrane 11 and the spacer 20 are adhesively joined with each other at respective glued portions formed along their peripheral edges, so that the membrane 11, spacer 20, and filter plate 14 are securely fixed together. The filter plate 14 is formed on its surface with an opening 18 for a filtrate flow path 17. The filter plate 14 also has a suction port 19 formed at its top end which communicates with the filtrate flow path 17.

According to such arrangement, a felt-like spacer 20 is interposed between the filter plate 14, which is made of, for example, polyvinyl chloride, a material resistant to adhesive penetration, and each organic filter membrane 11, and the spacer 20 allows adhesive 16 to easily penetrate thereinto. Therefore, considerable bond strength can be obtained.

During a water treating operation, the membrane element is immersed in the liquid being treated, and the liquid is filtered through the organic filter membranes 11 under negative pressure applied via the suction port 19. Filtrate that has passed through the organic filter membrane 11 is directed to the opening 18 via the spacer 20 which serves as a passage and is guided along the filtrate flow path 17 until it reaches the suction port 19, from which ist is delivered to a subsequent system.

Adhesive 16 is allowed to easily infiltrate into the spacer 20 at the peripheral edge portion, i. e., glued portion A of the spacer 20, and the infiltrating adhesive is solidified to serve as a water stopper. This prevents the liquid being treated from entry into the membrane element via the peripheral edge portion of the spacer 20.

## Claims

1. A method of manufacturing a filter membrane element wherein an organic filter membrane (11) having a plate-like support member (12) made of nonwoven fabric and a film coating (13) formed on both sides of the support member (12) is joined with a surface of a filter plate (14), said method comprising dissolving a portion of said film coating (13) thereby to cause the support member (12) to be exposed at the dissolved portion thereof, and subsequently joining the exposed portion of the support member (12) with a corresponding portion of the filter plate (14) by means of fusion bonding.

## Patentansprüche

1. Verfahren zur Herstellung eines Filtermembranelements, worin eine organische Filtermembran (11) mit einem aus nichtgewebtem Stoff hergestellten plattenartigen Trägerteil (12) und einer auf beiden Seiten des Trägerteils (12) gebildeten Filmbeschichtung (13) verbunden wird mit einer Fläche einer Filterplatte (14), wobei besagtes Verfahren das Auflösen eines Bereiches der besagten Filmbeschichtung (13), dabei das Trägerteil (12) dazu veranlassend, an dessen aufgelöstem Bereich freigelegt zu sein, und das anschließende Zusammenführen des freigelegten Bereiches des Trägerteils (12) mit einem entsprechenden Bereich der Filterplatte (14) mittels einer Verschmelzbindung umfaßt.

## Revendications

1. Procédé de fabrication d'un élément de membrane de filtre, selon lequel une membrane de filtre organique (11), ayant un élément de support (12) en forme de plaque en un non-tissé et un film de revêtement (13) sur les deux faces de l'élément de support (12), est réunie à une surface d'une plaque de filtre (14),
ce procédé consistant à dissoudre une partie du film de revêtement (13) pour exposer l'élément de support (12) à la partie dissoute et ensuite réunir la partie exposée de l'élément de support (12) à la partie correspondante de la plaque de filtre (14) par des moyens de liaison par fusion.
